# EUROPEAN PATENT APPLICATION

(11) **EP 4 694 484 A1**
(43) Date of publication of application: **11.02.2026**
(21) Application number: 24795772.3
(22) Date of filing: 01.04.2024
(51) Int. Cl.: H04W 72/23

(54) **COMMUNICATION METHOD AND APPARATUS**

(30) Priority: 28.04.2023 CN 202310491415
(71) Applicant: Huawei Technologies Co., Ltd., Shenzhen, Guangdong 518129 (CN)
(72) Inventor: CHEN, Ying, Shenzhen, Guangdong 518129 (CN); TIE, Xiaolei, Shenzhen, Guangdong 518129 (CN); WANG, Jun, Shenzhen, Guangdong 518129 (CN)
(74) Representative: Maiwald GmbH
(86) International application number: PCT/CN2024/085171
(87) International publication number: WO 2024/222391

(57) **Abstract**

A communication method and apparatus are provided, to enable various terminal devices to successfully access a satellite. A terminal device receives, from a network device, configuration information that indicates at least two groups of random access resources, where any group of random access resources includes a plurality of subcarriers in frequency domain, and subcarrier spacings included in the at least two groups of random access resources in frequency domain are different. The terminal device selects one group of random access resources from the at least two groups of random access resources based on first information, and sends a random access preamble to the network device based on the selected group of random access resources. The first information is information indicating whether the terminal device supports a GNSS capability, or is a random access preamble type selected by the terminal device. A plurality of groups of random access resources with different subcarrier spacings in frequency domain are configured to respectively resist different frequency offsets, so that the terminal device can select an appropriate random access resource depending on whether the terminal device supports the GNSS capability or based on the selected random access preamble type or the like, to access a satellite.

## Description

### CROSS-REFERENCE TO RELATED APPLICATIONS

This application claims priority to Chinese Patent Application No. 202310491415.2, filed with the China National Intellectual Property Administration on April 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In comparison with terrestrial communication, satellite communication has unique advantages. For example, the satellite communication can provide a wider coverage area, and satellite base stations are not vulnerable to natural disasters or external forces. Introduction of the satellite communication in 5th generation (5th generation, 5G) communication can provide communication services for some areas that cannot be covered by terrestrial communication networks such as oceans and forests; enhance 5G communication reliability, for example, ensure that airplanes, trains, and users on these transportation means obtain better communication services; and provide more data transmission resources for the 5G communication to increase a network rate. Therefore, supporting both the terrestrial communication and the satellite communication is an inevitable trend of the communication system, and has great benefits in terms of wide coverage, reliability, multi-connectivity, a high throughput, and the like.

A most prominent characteristic of the satellite communication is high mobility. A wide spectrum is introduced when a network device receives a preamble (preamble) sequence from a terminal device. Currently, the terminal device that communicates with a satellite includes a terminal device of an internet of things (internet of things, IoT) type, and generally needs to have a global navigation satellite system (global navigation satellite system, GNSS) capability, to implement frequency offset synchronization by using a GNSS positioning capability, and successfully access the satellite by using the GNSS capability. However, currently, for the purpose of reducing costs, most terminal devices of the IoT type on the ground do not have the GNSS capability. Therefore, in a scenario in which the satellite communication is supported, how to enable terminal devices with various capabilities to successfully access a satellite is an urgent problem to be resolved.

### SUMMARY

This application provides a communication method and apparatus, to enable various terminal devices to successfully access a satellite.

According to a first aspect, this application provides a communication method. The method may be applied to a terminal device or a processor, a chip, a chip system, a functional module, or the like of the terminal device. The method may include: The terminal device receives configuration information from a network device, where the configuration information indicates at least two groups of random access resources, any group of random access resources includes a plurality of subcarriers in frequency domain, and subcarrier spacings included in the at least two groups of random access resources in frequency domain are different. The terminal device selects one group of random access resources from the at least two groups of random access resources based on first information, and sends a random access preamble to the network device based on the selected group of random access resources. The first information may be information indicating whether the terminal device supports a GNSS capability, or the first information may be a random access preamble type selected by the terminal device.

Based on the foregoing method, a plurality of groups of random access resources are configured, and subcarrier spacings included in the plurality of groups of random access resources in frequency domain are different, so that different frequency offsets can be respectively resisted, and the terminal device can select an appropriate random access resource based on the information indicating whether the terminal device supports the GNSS capability, the selected random access preamble type, or the like, to perform random access. Therefore, a success rate of accessing a satellite is increased.

In a possible design, the at least two random access resources may include a first group of random access resources and a second group of random access resources. The first group of random access resources and the second group of random access resources have different time domain positions and same frequency domain positions; or the first group of random access resources and the second group of random access resources have same time domain positions and different frequency domain positions. In this way, a random access resource can be flexibly configured. When the first group of random access resources and the second group of random access resources have different time domain positions and same frequency domain positions, a current conventional bandwidth range may be reused. When the first group of random access resources and the second group of random access resources have same time domain positions and different frequency domain positions, a periodicity of a random access occasion may be shortened.

In a possible design, the at least two random access resources may include a first group of random access resources and a second group of random access resources. When the first group of random access resources and the second group of random access resources have same time domain positions and different frequency domain positions, there is a first frequency domain spacing between the first group of random access resources and the second group of random access resources, and the first frequency domain spacing includes one or more subcarriers. In this way, it can be ensured that a subcarrier used for random access in the second group of random access resources is not adjacent to a subcarrier used for random access in the first group of random access resources, to reduce interference between the subcarriers.

In a possible design, the at least two random access resources may include a first group of random access resources and a second group of random access resources. When the first group of random access resources and the second group of random access resources have same time domain positions and different frequency domain positions, there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing includes one or more subcarriers. In this way, frequency hopping of the random access preamble can be performed in a bandwidth range of the random access occasion, and it can be ensured that a subcarrier used for random access in the second group of random access resources is not adjacent to a subcarrier used for random access in the first group of random access resources, to reduce interference between the subcarriers.

In a possible design, any subcarrier included in the first group of random access resources may be used for random access, and any two subcarriers used for random access in the second group of random access resources are not adjacent to each other. In this way, different groups of random access resources can resist different frequency offsets.

In a possible design, there is a third frequency domain spacing between two subcarriers that are closest to each other and that are used for random access in the second group of random access resources, and the third frequency domain spacing may include one or more subcarriers. In this way, interference can be reduced.

In a possible design, a quantity of subcarriers included in any group of random access resources in frequency domain is M, and M may be a positive integer less than or equal to 6 or may be a positive integer multiple of 12.

In a possible design, after the terminal device sends the random access preamble to the network device based on the selected group of random access resources, the terminal device may receive a frequency offset correction parameter from the network device, and perform frequency offset correction based on the frequency offset correction parameter. Therefore, a frequency offset of the terminal device can be corrected.

According to a second aspect, this application provides a communication method. The method may be applied to a network device or a processor, a chip, a chip system, a functional module, or the like of the network device. The method may include: The network device sends configuration information to a terminal device, where the configuration information indicates at least two groups of random access resources, any group of random access resources includes a plurality of subcarriers in frequency domain, and subcarrier spacings included in the at least two groups of random access resources in frequency domain are different. The network device receives, based on one group of random access resources, a random access preamble sent by the terminal device, where the group of random access resources is one of the at least two groups of random access resources, the group of random access resources is selected by the terminal device from the at least two groups of random access resources based on first information, and the first information is information indicating whether the terminal device supports a GNSS capability, or the first information is a random access preamble type selected by the terminal device.

Based on the foregoing method, a plurality of groups of random access resources are configured, and subcarrier spacings included in the plurality of groups of random access resources in frequency domain are different, so that different frequency offsets can be respectively resisted, and the terminal device can select an appropriate random access resource based on the information indicating whether the terminal device supports the GNSS capability, the selected random access preamble type, or the like, to perform random access. Therefore, a success rate of accessing a satellite is increased.

In a possible design, the at least two random access resources may include a first group of random access resources and a second group of random access resources. The first group of random access resources and the second group of random access resources have different time domain positions and same frequency domain positions; or the first group of random access resources and the second group of random access resources have same time domain positions and different frequency domain positions. In this way, a random access resource can be flexibly configured. When the first group of random access resources and the second group of random access resources have different time domain positions and same frequency domain positions, a current conventional bandwidth range may be reused. When the first group of random access resources and the second group of random access resources have same time domain positions and different frequency domain positions, a periodicity of a random access occasion may be shortened.

In a possible design, the at least two random access resources may include a first group of random access resources and a second group of random access resources. When the first group of random access resources and the second group of random access resources have same time domain positions and different frequency domain positions, there is a first frequency domain spacing between the first group of random access resources and the second group of random access resources, and the first frequency domain spacing includes one or more subcarriers. In this way, it can be ensured that a subcarrier used for random access in the second group of random access resources is not adjacent to a subcarrier used for random access in the first group of random access resources, to reduce interference between the subcarriers.

In a possible design, the at least two random access resources may include a first group of random access resources and a second group of random access resources. When the first group of random access resources and the second group of random access resources have same time domain positions and different frequency domain positions, there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing includes one or more subcarriers. In this way, frequency hopping of the random access preamble can be performed in a bandwidth range of the random access occasion, and it can be ensured that a subcarrier used for random access in the second group of random access resources is not adjacent to a subcarrier used for random access in the first group of random access resources, to reduce interference between the subcarriers.

In a possible design, any subcarrier included in the first group of random access resources may be used for random access, and any two subcarriers used for random access in the second group of random access resources are not adjacent to each other. In this way, different groups of random access resources can resist different frequency offsets.

In a possible design, there is a third frequency domain spacing between two subcarriers that are closest to each other and that are used for random access in the second group of random access resources, and the third frequency domain spacing may include one or more subcarriers. In this way, interference can be reduced.

In a possible design, a quantity of subcarriers included in any group of random access resources in frequency domain is M, and M may be a positive integer less than or equal to 6 or may be a positive integer multiple of 12.

In a possible design, after the network device receives the random access preamble from the terminal device, the network device may determine, based on the group of random access resources, whether the terminal device supports the GNSS capability, or determine the random access preamble type of the random access preamble. Therefore, the network device can identify a GNSS supporting capability of the terminal device or a type of a sent random access preamble.

In a possible design, after the network device receives the random access preamble from the terminal device, the network device sends a frequency offset correction parameter to the terminal device, so that the terminal device can perform frequency offset correction based on the frequency offset correction parameter, to correct a frequency offset of the terminal device.

According to a third aspect, this application further provides a communication apparatus. The communication apparatus may be a terminal device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the first aspect or the possible design examples of the first aspect. Details are not described herein again.

In a possible design, the structure of the communication apparatus includes a transceiver and a processor, and optionally further includes a memory. The transceiver is configured to: receive and send data, a message, information, or the like, and communicate and interact with another device in a communication system. The processor is configured to support the communication apparatus in performing the corresponding functions in the first aspect or the possible design examples of the first aspect. The memory is coupled to the processor, and the memory stores program instructions and data that are necessary for the communication apparatus.

According to a fourth aspect, this application further provides a communication apparatus. The communication apparatus may be a network device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the second aspect or the possible design examples of the second aspect. Details are not described herein again.

In a possible design, the structure of the communication apparatus includes a transceiver and a processor, and optionally further includes a memory. The transceiver is configured to: receive and send data, a message, information, or the like, and communicate and interact with another device in a communication system. The processor is configured to support the communication apparatus in performing the corresponding functions in the second aspect or the possible design examples of the second aspect. The memory is coupled to the processor, and the memory stores program instructions and data that are necessary for the communication apparatus.

According to a fifth aspect, an embodiment of this application provides a communication system, where the communication system may include a terminal device performing the first aspect and any one of the possible designs of the first aspect, a network device performing the second aspect and any one of the possible designs of the second aspect, and the like.

According to a sixth aspect, an embodiment of this application provides a computer-readable storage medium. The computer-readable storage medium stores program instructions, and when the program instructions are run on a computer, the computer is enabled to perform the method in the first aspect and any one of the possible designs of the first aspect or in the second aspect and any one of the possible designs of the second aspect in embodiments of this application. For example, the computer-readable storage medium may be any usable medium that can be accessed by the computer. Examples of the computer-readable medium include but are not limited to: a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store expected program code in a form of instructions or a data structure and that can be accessed by the computer.

According to a seventh aspect, an embodiment of this application provides a computer program product, including instructions. When the instructions are run on a computer, the method in the first aspect or any one of the possible designs of the first aspect, or the method in the second aspect or any one of the possible designs of the second aspect is performed.

According to an eighth aspect, this application further provides a chip, where the chip includes a processor. The processor is coupled to a memory and configured to read and execute program instructions stored in the memory, so that the chip can implement the method in the first aspect or any one of the possible designs of the first aspect or in the second aspect or any one of the possible designs of the second aspect.

For each of the third aspect to the eighth aspect and technical effects that can be achieved by the aspect, refer to the foregoing descriptions of the technical effects that can be achieved by the first aspect or the possible solutions in the first aspect or by the second aspect or the possible solutions in the second aspect. Details are not described herein again.

### BRIEF DESCRIPTION OF DRAWINGS

FIG. 1 is a diagram of an architecture of a communication system according to this application;
FIG. 2 is a flowchart of a communication method according to this application;
FIG. 3 is a diagram of performing frequency hopping transmission of a random preamble on a random access occasion based on a second group of random access resources according to this application;
FIG. 4 is a diagram of a first group of random access resources and a second group of random access resources according to this application;
FIG. 5 is another diagram of a first group of random access resources and a second group of random access resources according to this application;
FIG. 6 is another diagram of a first group of random access resources and a second group of random access resources according to this application;
FIG. 7 is a diagram of a structure of a communication apparatus according to this application; and
FIG. 8 is a diagram of a structure of a communication apparatus according to this application.

### DESCRIPTION OF EMBODIMENTS

The following further describes this application in detail with reference to the accompanying drawings.

Embodiments of this application provide a communication method and apparatus, to enable various terminal devices to successfully access a satellite. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and represents that three relationships may exist. For example, A and/or B may represent the following cases: Only A exists, both A and B exist, and only B exists, where A and B may be singular or plural. "/" represents "or". For example, a/b indicates a or b.

To describe the technical solutions in embodiments of this application more clearly, the following describes a communication method and apparatus provided in embodiments of this application in detail with reference to the accompanying drawings.

The technical solutions provided in this application may be applied to various communication systems, for example, may be applied to a 5th generation (5th generation, 5G) communication system, for example, a new radio (new radio, NR) system, or may be applied to various communication systems evolved after 5G, for example, a 6th generation (6th generation, 6G) communication system. This application may be further applied to other communication systems and the like that support satellite communication.

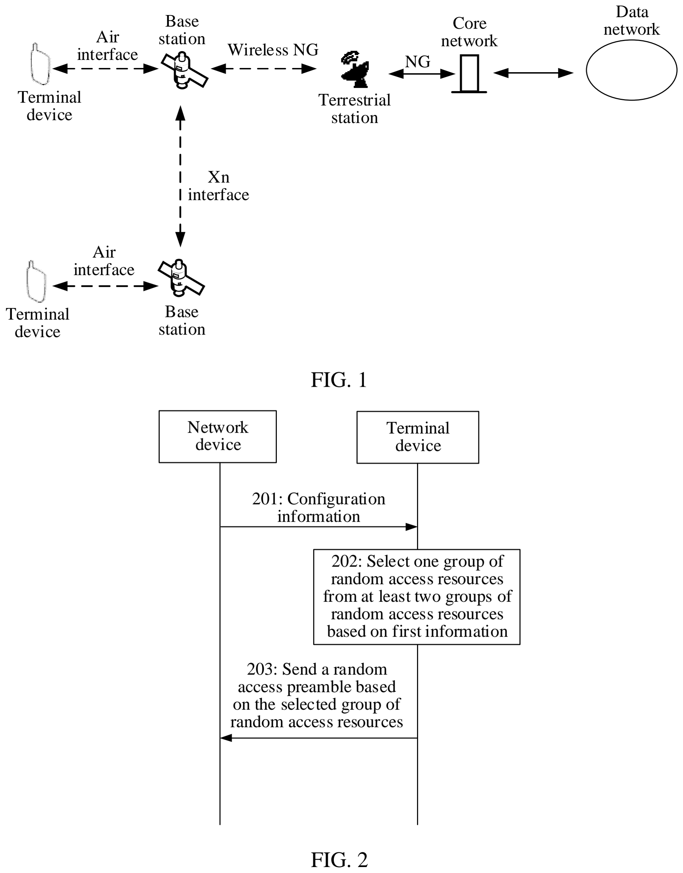

FIG. 1 shows an architecture of a possible communication system to which the communication method provided in this application is applicable. The communication system may support satellite communication. In the communication system, a base station is deployed on a satellite, and a terrestrial terminal device may communicate with the satellite base station through an air interface (where the air interface may be air interfaces of various types, for example, a 5G air interface), to access a mobile communication network. The satellite is used as a base station and is connected to a terrestrial station through an NG interface, and the terrestrial station is connected to a core network through the NG interface. The NG interface may be in a wireless form or may be in a wired form. Satellite base stations may communicate with each other. For example, the satellite base stations may communicate with each other through an Xn interface, and the satellites may complete signaling exchange and user data transmission between the base stations.

The terminal device may include various types of terminal devices that support new radio, for example, a mobile phone, a tablet computer, a vehicle-mounted terminal device, and a wearable terminal device. The terminal may access a satellite network through the air interface and initiate services such as a call and internet access. The terminal device may be user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a handheld device having a wireless communication function, a computing device or another processing device that is connected to a wireless modem, a vehicle-mounted device, a communication device carried on a high-altitude aircraft, a wearable device, an uncrewed aerial vehicle, a robot, a smart point of sale (point of sale, POS) machine, a terminal in an internet of things (internet of things, IoT), a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The base station is an example of a network device, and is mainly configured to: provide a radio access service, schedule a radio resource for an accessing terminal device, provide a reliable wireless transmission protocol and a data encryption protocol, and so on. The network device in embodiments of this application may be a device in a wireless network. For example, the network device may be a device that is deployed in a radio access network and that provides a wireless communication function for the terminal. For example, the network device may be a radio access network (radio access network, RAN) node that enables the terminal to access the wireless network, and may also be referred to as an access network device. The network device in embodiments of this application may be a next generation NodeB (next generation NodeB, gNB) in a 5G system, or may be a base station in a system evolved after 5G, for example, 6G. Specifically, the network device may include but is not limited to an evolved NodeB (evolved NodeB, eNB), a home NodeB (for example, a home evolved NodeB, or a home NodeB, HNB), a baseband unit (baseband unit, BBU), an active antenna unit (active antenna unit, AAU), a wireless relay node, a wireless backhaul node, a transmission point (transmission point, TP) or a transmission reception point (transmission reception point, TRP), or a device or the like that undertakes a base station function in device-to-device (device-to-device, D2D), vehicle-to-everything (vehicle-to-everything, V2X), and machine-to-machine (machine-to-machine, M2M) communication; may further include a central unit (central unit, CU) and a distributed unit (distributed unit, DU) in a cloud access network (cloud radio access network, C-RAN) system, a network device (which may be deployed on a high-altitude platform or a satellite) in a non-terrestrial network (non-terrestrial network, NTN) communication system; or may be one antenna panel or a group of antenna panels (including a plurality of antenna panels) of a base station in a 5G mobile communication system. Alternatively, the network device may be a network node that forms the gNB or the transmission point. This is not specifically limited in embodiments of this application.

The core network is mainly configured to provide functions such as user access control, mobility management, session management, user security authentication, and charging. The core network includes a plurality of functional units that may be classified into a control-plane functional entity and a data-plane functional entity. For example, an access and mobility management function (access and mobility management function, AMF) network element in the core network is responsible for user access management, security authentication, and mobility management. A session management function (session management function, SMF) network element is configured to be responsible for session management (including session establishment, modification, and release) of the terminal device, selection and reselection of a user plane function network element, internet protocol (internet protocol, IP) address allocation of the terminal device, quality of service (quality of service, QoS) control, charging data collection, roaming, and the like. The user plane unit (user plane function, UPF) network element is responsible for managing user plane data transmission, traffic statistics collection, secure eavesdropping, and the like.

The terrestrial station is mainly responsible for forwarding signaling and service data between the satellite and the base station or between the satellite and the core network.

The air interface represents a wireless link between the terminal and the base station.

The Xn interface represents an interface between base stations, and is mainly used for exchanging signaling, for example, handover.

The NG interface represents an interface between the base station and the core network, an interface between the terrestrial station and the core network, or an interface between the satellite base station and the terrestrial station (in this case, the interface is a wireless link), and is mainly used for exchanging signaling such as a non-access stratum (non-access stratum, NAS) of the core network and service data of a user.

It should be noted that the communication system shown in FIG. 1 is merely an example for description, and is not intended to limit the architecture of the communication system to which this application is applicable.

A most prominent characteristic of the satellite communication is high mobility. Therefore, a large time offset and a large spectrum are introduced when a base station receives a preamble (preamble) sequence from a terminal device. Even if the terminal device performs estimation and pre-compensation on the time offset and the frequency offset based on a geographical location and ephemeris information of the terminal device, an inaccurate geographical location, an inaccurate ephemeris, and a frequency offset introduced by hardware of the terminal device all introduce a large frequency offset to the preamble sequence. When a narrowband (narrowband, NB) IoT is applied to the satellite communication, a subcarrier spacing of a narrowband physical random access channel (narrowband physical random access channel, NPRACH) is small. For a preamble sequence on an adjacent frequency domain resource, introduction of the frequency offset causes inter-carrier interference, and consequently, satellite access fails. In addition, currently, the terminal device that communicates with the satellite generally needs to have a GNSS capability. If an IoT terminal device has the GNSS capability, high power consumption overheads are introduced when a position is estimated through a GNSS, and a service life of the IoT terminal device is reduced. In addition, the IoT terminal device with the GNSS capability also increases costs of the IoT terminal device.

Based on this, embodiments of this application provide a communication method, to enable various terminal devices to successfully connect to a satellite. For example, a terminal device without the GNSS capability or the like successfully connects to the satellite.

It should be noted that, in the following embodiments, the communication method provided in this application is described in detail by using a terminal device and a network device as an example. It should be understood that an operation performed by the terminal device may alternatively be implemented by a processor, a chip or a chip system, a functional module, or the like in the terminal device. An operation performed by the network device may alternatively be implemented by a processor, a chip or a chip system, a functional module, or the like in the network device. This is not limited in this application.

Based on the foregoing descriptions, an embodiment of this application provides a communication method. As shown in FIG. 2, a procedure of the method may include the following steps.

Step 201: A network device sends configuration information to a terminal device, where the configuration information indicates at least two groups of random access resources, any group of random access resources includes a plurality of subcarriers in frequency domain, and subcarrier spacings included in the at least two groups of random access resources in frequency domain are different. Correspondingly, the terminal device receives the configuration information from the network device.

The network device may be a network device deployed on a satellite, for example, a satellite base station.

Step 202: The terminal device selects one group of random access resources from the at least two groups of random access resources based on first information.

The first information may be information indicating whether the terminal device supports a GNSS capability. For example, the terminal device supports the GNSS capability or does not support the GNSS capability. Alternatively, the first information may be that the terminal device supports a GNSS capability but the GNSS capability is weak, where the weak GNSS capability represents that a positioning range of the terminal device is less than a specific range threshold. Alternatively, the first information may be that the terminal device supports a GNSS capability but the terminal device does not enable a GNSS function. Alternatively, the first information is a random access preamble type selected by the terminal device.

Step 203: The terminal device sends a random access preamble to the network device based on the selected group of random access resources. Correspondingly, the network device receives, on the group of random access resources that is selected by the terminal device, the random access preamble sent by the terminal device.

Based on the foregoing method, a plurality of groups of random access resources are configured, and subcarrier spacings included in the plurality of groups of random access resources in frequency domain are different, so that different frequency offsets can be respectively resisted, and the terminal device can select an appropriate random access resource based on information indicating whether the terminal device supports the GNSS capability, the selected random access preamble type, or the like, to perform random access. Therefore, a success rate of accessing a satellite can be effectively increased.

A quantity of subcarriers included in any group of random access resources in frequency domain may be M, and M may be a positive integer less than or equal to 6, for example, 5 or 6; or M may be a positive integer multiple of 12, for example, 12 or 24. Certainly, a quantity of subcarriers included in one group of random access resources in frequency domain is not limited in this application. The foregoing values are merely examples, and a value outside the foregoing ranges may also be used, for example, 13. This is not limited in this application.

In an optional implementation, the at least two groups of random access resources may include a first group of random access resources and a second group of random access resources. Any subcarrier included in the first group of random access resources may be used for random access. In other words, if the terminal device selects the first group of random access resources, the terminal device may select any subcarrier from subcarriers included in the first group of random access resources to perform transmission of the random access preamble, for example, perform frequency hopping and repeated transmission of the random preamble.

Any two subcarriers used for random access in the second group of random access resources are not adjacent to each other. Random access cannot be initiated on a subcarrier on which random access cannot be performed and that is in the second group of random access resources. This may resist interference between the subcarriers. In other words, if the terminal device selects the second group of random access resources, the terminal device may perform transmission of the random access preamble on a part of subcarriers in the second group of random access resources.

For example, there may be a third frequency domain spacing between two subcarriers that are closest to each other and that are used for random access in the second group of random access resources, and the third frequency domain spacing may include one or more subcarriers, for example, one subcarrier or two subcarriers.

When quantities of subcarriers included in the third frequency domain spacing are different, different frequency offsets can be resisted. A larger quantity of subcarriers included in the third frequency domain spacing indicates a larger frequency offset to be resisted.

A quantity of subcarriers included in the third frequency domain spacing may be predefined, or may be configured by the network device. This is not limited in this application.

For example, when the third frequency domain spacing includes one subcarrier, a subcarrier used for random access in the second group of random access resources may be an even-numbered subcarrier or an odd-numbered subcarrier. The terminal device may select a subcarrier from these subcarriers to perform transmission of the random access preamble, for example, perform frequency hopping and repeated transmission of the random preamble.

When the terminal device performs transmission of the random access preamble on the subcarrier used for random access in the second group of random access resources, the selected subcarrier may be configured by the network device. For example, it is assumed that the third frequency domain spacing includes three subcarriers, and transmission of the random access preamble starts from a subcarrier 0. The terminal device may select subcarriers 1, 4, and 8 to perform repeated transmission of the random access preamble.

In a possible manner, there may be the following cases for the first group of random access resources and the second group of random access resources.

Case a1: The first group of random access resources and the second group of random access resources have different time domain positions and same frequency domain positions.

In some embodiments, a time domain position of each group of random access resources may correspond to one random access occasion, or the time domain positions of the first group of random access resources and the second group of random access resources jointly occupy different time domain ranges of a same random access occasion.

The random access occasion occurs periodically or aperiodically. The random access occasion may be configured by the network device or predefined.

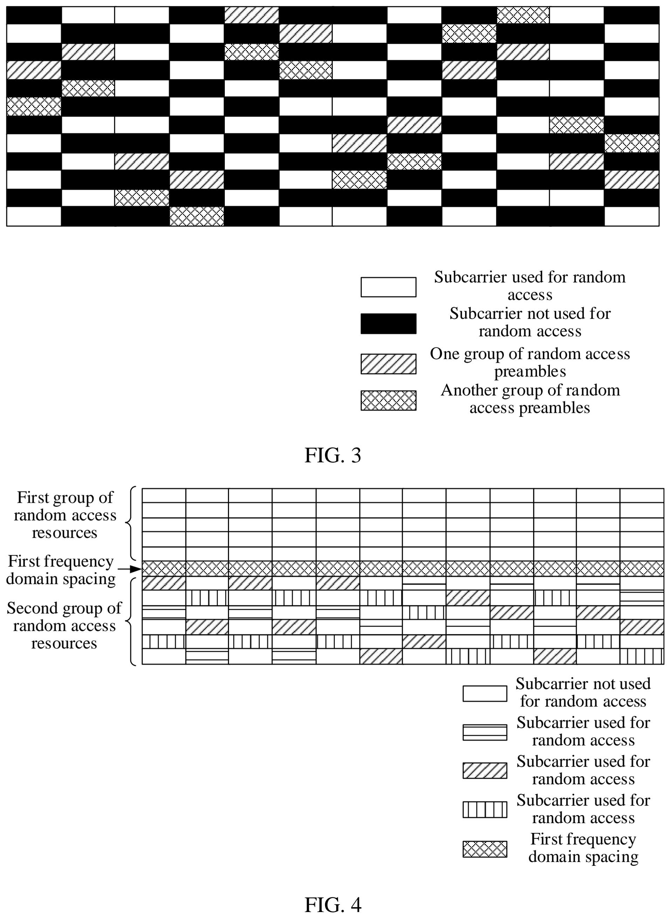

For example, it is assumed that the second group of random access resources includes 12 subcarriers in frequency domain, a diagram of performing frequency hopping transmission of a random preamble on a random access occasion based on a second group of random access resources may be shown in FIG. 3. FIG. 3 shows a frequency hopping pattern of two different groups of random access preambles with four repetitions, and one group of random access preambles includes four random access preambles.

It should be understood that a quantity of the subcarriers being 12 is merely an example, and is not limited to 12 in this application.

Case a2: The first group of random access resources and the second group of random access resources have same time domain positions and different frequency domain positions.

In an optional implementation b1, there is a first frequency domain spacing between the first group of random access resources and the second group of random access resources, and the first frequency domain spacing may include one or more subcarriers.

In the implementation b1, the first group of random access resources and the second group of random access resources may occupy different frequency domain ranges on a same random access occasion. For example, a frequency domain position of the first group of random access resources is higher than a frequency domain position of the second group of random access resources, or the frequency domain position of the first group of random access resources may be lower than the frequency domain position of the second group of random access resources. This is not limited in this application.

The first frequency domain spacing can ensure that the subcarrier used for random access in the second group of random access resources is not adjacent to the subcarrier used for random access in the first group of random access resources. The first frequency domain spacing may also be referred to as a guard spacing or a guard subcarrier.

For example, it is assumed that the first frequency domain spacing includes one subcarrier, and the first group of random access resources, the second group of random access resources, and the first frequency domain spacing occupy frequency domain positions of a total of 12 subcarriers. A diagram of a first group of random access resources and a second group of random access resources may be shown in FIG. 4.

It should be understood that the 12 subcarriers are merely an example. Optionally, the first group of random access resources, the second group of random access resources, and the first frequency domain spacing may alternatively occupy a total of 25 subcarriers. For example, a subcarrier 0 to a subcarrier 11 are subcarriers occupied by the second group of random access resources, a subcarrier 12 is the first frequency domain spacing, and a subcarrier 12 to a subcarrier 24 are subcarriers occupied by the first group of random access resources. Alternatively, a subcarrier 0 to a subcarrier 11 are subcarriers occupied by the first group of random access resources, a subcarrier 12 is the first frequency domain spacing, and a subcarrier 12 to a subcarrier 24 are subcarriers occupied by the second group of random access resources. Certainly, this is merely an example. Specific distribution of the first group of subcarriers and the second group of subcarriers may be in a plurality of other manners, and the manners are not listed one by one in this application.

In an optional implementation b2, there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing includes one or more subcarriers.

In the implementation b2, regardless of whether the terminal device selects the first group of random access resources or the second group of random access resources, frequency hopping may be performed on all subcarriers of one random access occasion. For example, frequency hopping may be performed over a range from a subcarrier 2 to a subcarrier N-2, where N represents a quantity of available subcarriers. In the implementation b1, when frequency hopping is performed on each group of random access resources, a range of subcarriers that can be used by the terminal device for frequency hopping is shortened to half of an original range. In the implementation b2, without changing an original frequency hopping rule, frequency hopping can be performed in a bandwidth of an entire random access occasion. However, it needs to be ensured that a subcarrier used for random access in the first group of random access is not adjacent to a subcarrier used for random access in the second group of random access resources, to avoid interference. In other words, the foregoing second frequency domain spacing exists, and the second frequency domain guard spacing may be understood as a guard spacing or a guard subcarrier.

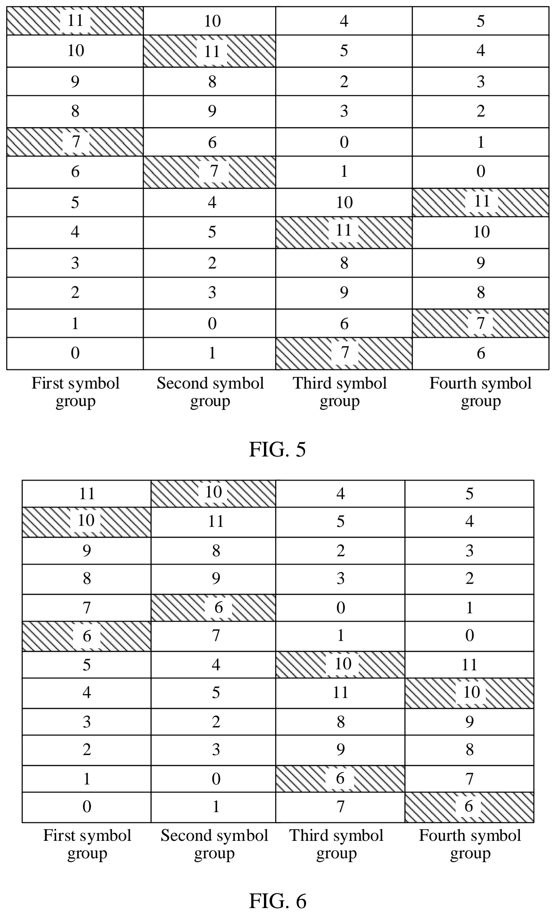

For example, frequency hopping of the terminal device is performed in a unit of four symbol groups (symbol groups) for repeated transmission of the random access preambles, and for the four symbol groups, based on subcarrier selection of the first symbol group, frequency hopping rules of three following symbol groups are determined. For example, the second frequency domain spacing includes one subcarrier. No interference is generated between the second group of random access resources and the first group of random access resources. For example, as shown in FIG. 5, it is assumed that subcarriers whose sequence numbers are 0, 2, and 4 are subcarriers that can be used for random access in the second group of random access resources, subcarriers whose sequence numbers are 6, 8, 9, and 10 are subcarriers that can be used for random access in the first group of random access resources, and subcarriers whose sequence numbers are 7 and 11 are guard subcarriers. For another example, as shown in FIG. 6, it is assumed that subcarriers whose sequence numbers are 1, 3, and 5 are subcarriers that can be used for random access in the second group of random access resources, subcarriers whose sequence numbers are 7, 8, 9, and 11 are subcarriers that can be used for random access in the first group of random access resources, and subcarriers whose sequence numbers are 6 and 10 are guard subcarriers.

In the implementation b2, on a random access occasion, specific subcarriers that belong to the first group of random access resources and specific subcarriers that belong to the second group of random access resources may be predefined by using a protocol or indicated by the network device.

The subcarrier included in the second frequency domain spacing may be determined based on the subcarriers in the second group of random access resources, may be predefined, or may be indicated by the network device.

In some embodiments, when the terminal device selects one group of random access resources from the at least two groups of random access resources based on the first information, if the terminal device determines that the terminal device does not support the GNSS capability, the terminal device determines that the terminal device supports the GNSS capability but the GNSS capability is weak, or the terminal device determines that the terminal device supports the GNSS capability but does not enable a GNSS function (or a quantity of times of enabling the GNSS function is less than a quantity threshold), the terminal device may select the second group of random access resources to perform transmission of the random access preamble. If the terminal device determines that the terminal device supports the GNSS capability, the terminal device may select the first group of random access resources to perform transmission of the random access preamble.

Alternatively, if a type of the random access preamble selected by the terminal device is a first type, the terminal device may select the first group of random access resources to perform transmission of the random access preamble; or if a type of the random access preamble selected by the terminal device is a second type, the terminal device may select the second group of random access resources to perform transmission of the random access preamble. A capability of the first-type random access preamble to resist a frequency offset is stronger than a capability of the second-type random access preamble to resist a frequency offset.

In some embodiments, a cyclic prefix (cyclic prefix, CP) of a type of a random access preamble that has a strong capability to resist a frequency offset is longer than a CP of a type of a random access preamble that has a strong capability to resist a frequency offset. It may also be understood that a sequence of the type of the random access preamble that has the strong capability to resist the frequency offset is longer than a sequence of the type of the random access preamble that has the strong capability to resist the frequency offset.

In an example, random access preambles selected by terminal devices may be the same, but random access resources are different; or random access resources selected by terminal devices are the same, but random access preambles are different.

Correspondingly, the network device may determine, based on the group of random access resources on which the random access preamble is received (that is, the group of random access resources that is selected by the terminal device for sending the random access preamble), whether the terminal device supports the GNSS capability, determine that the terminal device performs random access without an accurate GNSS, or determine a random access preamble type of the random access preamble.

For example, the network device may determine the GNSS capability of the terminal device or the type of the random access preamble by using time-frequency positions (that is, time-frequency positions of the group of random access resources that is selected by the terminal device in a bandwidth range) of the received random access preamble in a bandwidth range.

In some implementations, the network device may further determine, based on random access resources on which the random access preamble is received, whether the network device needs to subsequently send a frequency offset correction parameter to the terminal device. In other words, the network device may determine specific random access resources on which the frequency offset correction parameter needs to be sent, and specific resources on which the frequency offset correction parameter does not need to be sent. For example, when the random access preamble is received on the second group of random access resources, the frequency offset correction parameter needs to be sent.

In an optional implementation, the second group of random access resources may also be bound to a coverage level of the terminal device. If the coverage level is low, an orbital altitude of a corresponding serving satellite is high, or an elevation angle of the serving satellite is small. The third frequency domain spacing in the second group of random access resources may have different configurations at different coverage levels.

It should be noted that, in the foregoing descriptions, only that the at least two groups of random access resources include the first group of random access resources and the second group of random access resources is used for description. Optionally, the at least two groups of random access resources may further include a third group of random access resources and a fourth group of random access resources, or more groups of random access resources. For the third group of random access resources, a fifth group of random access resources, or another group of random access resources, refer to the descriptions of the second group of random access resources in the foregoing case a1 and case a2. For example, the first group of random access resources, the second group of random access resources, the third group of random access resources, the fourth group of random access resources, and another group of random access resources have different time domain positions and same frequency domain positions. Alternatively, the first group of random access resources, the second group of random access resources, the third group of random access resources, the fourth group of random access resources, and another group of random access resources have different frequency domain positions and same time domain positions. For details, refer to the foregoing descriptions. Details are not described herein again.

In this way, terminal devices with different GNSS capabilities may select different random access resources, the terminal devices may select different types of access preambles, or the terminal devices may select different random access resources, to correspond to different frequency offsets.

After the terminal device selects the second group of random access resources to send the random preamble, the terminal device may receive a frequency offset correction parameter from the network device, and the terminal device performs frequency offset correction based on the frequency offset correction parameter.

For example, the network device may include, in a message 2 (message 2, msg2) in a random access procedure, the frequency offset correction parameter that is to be sent to the terminal device, to correct a frequency offset of the terminal device. The msg2 is a message that is received by the terminal device from the network device after the terminal device sends the random access preamble.

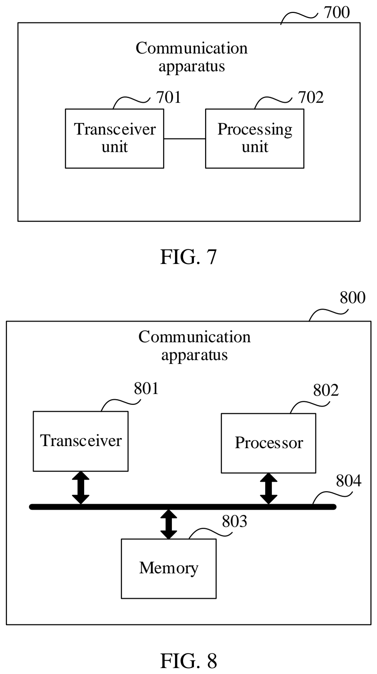

Based on the foregoing embodiments, an embodiment of this application further provides a communication apparatus. As shown in FIG. 7, the communication apparatus 700 may include a transceiver unit 701 and a processing unit 702. The transceiver unit 701 is configured to receive a message (information or data) or send a message (information or data) by the communication apparatus 700, and the processing unit 702 is configured to control and manage an action of the communication apparatus 700. The processing unit 702 may further control steps performed by the transceiver unit 701.

For example, the communication apparatus 700 may be specifically the terminal device in the foregoing embodiments, a processor, a chip, or a chip system in the terminal device, a functional module, or the like. Alternatively, the communication apparatus 700 may be specifically the network device in the foregoing embodiments, a processor, a chip, or a chip system in the network device, a functional module, or the like.

In an embodiment, when the communication apparatus 700 is configured to implement functions of the terminal device in the foregoing embodiments, the transceiver unit 701 may be configured to receive configuration information from a network device, where the configuration information indicates at least two groups of random access resources, any group of random access resources includes a plurality of subcarriers in frequency domain, and subcarrier spacings included in the at least two groups of random access resources in frequency domain are different; the processing unit 702 may be configured to select one group of random access resources from the at least two groups of random access resources based on first information, where the first information is information indicating whether the terminal device supports a global navigation satellite system GNSS capability, or the first information is a random access preamble type selected by the terminal device; and the transceiver unit 701 may be further configured to send a random access preamble to the network device based on the selected group of random access resources.

In an optional implementation, the at least two random access resources include a first group of random access resources and a second group of random access resources. The first group of random access resources and the second group of random access resources have different time domain positions and same frequency domain positions; or the first group of random access resources and the second group of random access resources have same time domain positions and different frequency domain positions.

In a possible manner, the at least two random access resources include a first group of random access resources and a second group of random access resources, and when the first group of random access resources and the second group of random access resources have same time domain positions and different frequency domain positions, there is a first frequency domain spacing between the first group of random access resources and the second group of random access resources, and the first frequency domain spacing includes one or more subcarriers; or there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing includes one or more subcarriers.

Any subcarrier included in the first group of random access resources may be used for random access, and any two subcarriers used for random access in the second group of random access resources are not adjacent to each other.

For example, there is a third frequency domain spacing between two subcarriers that are closest to each other and that are used for random access in the second group of random access resources, and the third frequency domain spacing includes one or more subcarriers.

In an example, a quantity of subcarriers included in any group of random access resources in frequency domain is M, and M may be a positive integer less than or equal to 6 or may be a positive integer multiple of 12.

In some embodiments, the transceiver unit 701 may be further configured to receive a frequency offset correction parameter from the network device after the random access preamble is sent to the network device based on the selected group of random access resources; and the processing unit 702 may be further configured to perform frequency offset correction based on the frequency offset correction parameter.

In another embodiment, when the communication apparatus 700 is configured to implement functions of the network device in the foregoing embodiments, the transceiver unit 701 may be configured to: send configuration information to a terminal device, where the configuration information indicates at least two groups of random access resources, any group of random access resources includes a plurality of subcarriers in frequency domain, and subcarrier spacings included in the at least two groups of random access resources in frequency domain are different; receive, based on one group of random access resources, a random access preamble sent by the terminal device, where the group of random access resources is one of the at least two groups of random access resources, the group of random access resources is selected by the terminal device from the at least two groups of random access resources based on first information, and the first information is information indicating whether the terminal device supports a GNSS capability, or the first information is a random access preamble type selected by the terminal device. The processing unit 702 may be configured to control the transceiver unit 701 to perform the foregoing receiving and sending operations.

In an optional implementation, the at least two random access resources include a first group of random access resources and a second group of random access resources. The first group of random access resources and the second group of random access resources have different time domain positions and same frequency domain positions; or the first group of random access resources and the second group of random access resources have same time domain positions and different frequency domain positions.

When the first group of random access resources and the second group of random access resources have same time domain positions and different frequency domain positions, there is a first frequency domain spacing between the first group of random access resources and the second group of random access resources, and the first frequency domain spacing includes one or more subcarriers; or there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing includes one or more subcarriers.

In a possible manner, any subcarrier included in the first group of random access resources may be used for random access, and any two subcarriers used for random access in the second group of random access resources are not adjacent to each other.

For example, there is a third frequency domain spacing between two subcarriers that are closest to each other and that are used for random access in the second group of random access resources, and the third frequency domain spacing includes one or more subcarriers.

For example, a quantity of subcarriers included in any group of random access resources in frequency domain is M, and M may be a positive integer less than or equal to 6 or may be a positive integer multiple of 12.

In some embodiments, the processing unit 702 may be further configured to determine, based on the group of random access resources, whether the terminal device supports the GNSS capability, or determine the random access preamble type of the random access preamble.

In an example, the transceiver unit 701 may be further configured to send a frequency offset correction parameter to the terminal device after the random access preamble is received from the terminal device.

It should be noted that, in this embodiment of this application, division of the units is an example, and is merely logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods in embodiments of this application. The foregoing storage medium includes any medium that can store program code, such as a USB flash drive, a removable hard disk drive, a read-only memory (read-only memory, ROM), a random-access memory (random-access memory, RAM), a magnetic disk, or an optical disc.

Based on the foregoing embodiments, an embodiment of this application further provides a communication apparatus. As shown in FIG. 8, the communication apparatus 800 may include a transceiver 801 and a processor 802. Optionally, the communication apparatus 800 may further include a memory 803. The memory 803 may be disposed inside the communication apparatus 800, or may be disposed outside the communication apparatus 800. The processor 802 may control the transceiver 801 to receive and send a message, information, data, or the like. The transceiver may be a transceiver or the like.

Specifically, the processor 802 may be a central processing unit (central processing unit, CPU), a network processor (network processor, NP), or a combination of the CPU and the NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 801, the processor 802, and the memory 803 are connected to each other. Optionally, the transceiver 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one thick line is for representing the bus in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes an application program stored in the memory 803, to implement the foregoing functions, so that functions of the communication apparatus 800 can be implemented.

For example, the communication apparatus 800 may be specifically the terminal device in the foregoing embodiment; or the communication apparatus 800 may be specifically the network device in the foregoing embodiment.

In an embodiment, when the communication apparatus 800 implements the functions of the terminal device in the foregoing embodiment, the transceiver 801 may implement receiving and sending operations performed by the terminal device in the foregoing embodiment, and the processor 802 may implement another operation other than the receiving and sending operations performed by the terminal device in the foregoing embodiment. For detailed related descriptions, refer to related descriptions in the foregoing embodiments. Details are not described herein again.

In an embodiment, when the communication apparatus 800 implements the functions of the network device in the foregoing embodiment, the transceiver 801 may implement receiving and sending operations performed by the network device in the foregoing embodiment, and the processor 802 may implement another operation other than the receiving and sending operations performed by the network device in the foregoing embodiment. For detailed related descriptions, refer to related descriptions in the foregoing embodiments. Details are not described herein again.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the communication methods provided in the method embodiments.

An embodiment of this application further provides a computer program product. The computer program product is configured to store a computer program. When the computer program is executed by a computer, the computer may implement the communication methods provided in the method embodiments.

An embodiment of this application further provides a chip, including a processor. The processor is coupled to a memory, and is configured to invoke a program in the memory, so that the chip can implement the communication methods provided in the method embodiments.

An embodiment of this application further provides a chip. The chip is coupled to a memory, and the chip is configured to implement the communication methods provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowchart and/or block diagram of the method, the device (system), and the computer program product according to this application. It should be understood that computer program instructions may be used to implement each procedure and/or each block in the flowchart and/or the block diagram and a combination of the procedure and/or the block in the flowchart and/or the block diagram. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more procedures in the flowchart and/or in one or more blocks in the block diagram.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowchart and/or in one or more blocks in the block diagram.

The computer program instructions may alternatively be loaded onto the computer or the another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowchart and/or in one or more blocks in the block diagram.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, comprising:
receiving, by a first communication apparatus, configuration information from a network device, wherein the configuration information indicates at least two groups of random access resources, any group of random access resources comprises a plurality of subcarriers in frequency domain, and subcarrier spacings comprised in the at least two groups of random access resources in frequency domain are different;
selecting, by the first communication apparatus, one group of random access resources from the at least two groups of random access resources based on first information, wherein the first information is information indicating whether the first communication apparatus supports a global navigation satellite system GNSS capability, or the first information is a random access preamble type selected by the first communication apparatus; and
sending, by the first communication apparatus, a random access preamble to the network device based on the selected group of random access resources.

2. The method according to claim 1, wherein the at least two random access resources comprise a first group of random access resources and a second group of random access resources; and
the first group of random access resources and the second group of random access resources have different time domain positions and same frequency domain positions; or
the first group of random access resources and the second group of random access resources have same time domain positions and different frequency domain positions.

3. The method according to claim 1, wherein the at least two random access resources comprise a first group of random access resources and a second group of random access resources, and when the first group of random access resources and the second group of random access resources have same time domain positions and different frequency domain positions, there is a first frequency domain spacing between the first group of random access resources and the second group of random access resources, and the first frequency domain spacing comprises one or more subcarriers; or
there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing comprises one or more subcarriers.

4. The method according to claim 2 or 3, wherein any subcarrier comprised in the first group of random access resources is used for random access; and
any two subcarriers used for random access in the second group of random access resources are not adjacent to each other.

5. The method according to claim 4, wherein there is a third frequency domain spacing between two subcarriers that are closest to each other and that are used for random access in the second group of random access resources, and the third frequency domain spacing comprises one or more subcarriers.

6. The method according to any one of claims 1 to 5, wherein a quantity of subcarriers comprised in any group of random access resources in frequency domain is M, and M is a positive integer less than or equal to 6 or is a positive integer multiple of 12.

7. The method according to any one of claims 1 to 6, wherein after sending, by the first communication apparatus, the random access preamble to the network device based on the selected group of random access resources, the method further comprises:
receiving, by the first communication apparatus, a frequency offset correction parameter from the network device;
and
performing, by the first communication apparatus, frequency offset correction based on the frequency offset correction parameter.

8. A communication method, comprising:
sending, by a second communication apparatus, configuration information to a terminal device, wherein the configuration information indicates at least two groups of random access resources, any group of random access resources comprises a plurality of subcarriers in frequency domain, and subcarrier spacings comprised in the at least two groups of random access resources in frequency domain are different; and
receiving, by the second communication apparatus based on one group of random access resources, a random access preamble sent by the terminal device, wherein the group of random access resources is one of the at least two groups of random access resources, the group of random access resources is selected by the terminal device from the at least two groups of random access resources based on first information, and the first information is information indicating whether the terminal device supports a global navigation satellite system GNSS capability, or the first information is a random access preamble type selected by the terminal device.

9. The method according to claim 8, wherein the at least two random access resources comprise a first group of random access resources and a second group of random access resources; and
the first group of random access resources and the second group of random access resources have different time domain positions and same frequency domain positions; or
the first group of random access resources and the second group of random access resources have same time domain positions and different frequency domain positions.

10. The method according to claim 8, wherein the at least two random access resources comprise a first group of random access resources and a second group of random access resources, and when the first group of random access resources and the second group of random access resources have same time domain positions and different frequency domain positions, there is a first frequency domain spacing between the first group of random access resources and the second group of random access resources, and the first frequency domain spacing comprises one or more subcarriers; or
there is a second frequency domain spacing between a first subcarrier used for random access in the first group of random access resources and a second subcarrier used for random access in the second group of random access resources, the first subcarrier and the second subcarrier are two subcarriers that are closest to each other in frequency domain and that are in subcarriers used for random access in the first group of random access resources and in the second group of random access resources respectively, and the second frequency domain spacing comprises one or more subcarriers.

11. The method according to claim 9 or 10, wherein any subcarrier comprised in the first group of random access resources is used for random access; and
any two subcarriers used for random access in the second group of random access resources are not adjacent to each other.

12. The method according to claim 11, wherein there is a third frequency domain spacing between two subcarriers that are closest to each other and that are used for random access in the second group of random access resources, and the third frequency domain spacing comprises one or more subcarriers.

13. The method according to any one of claims 8 to 12, wherein a quantity of subcarriers comprised in any group of random access resources in frequency domain is M, and M is a positive integer less than or equal to 6 or is a positive integer multiple of 12.

14. The method according to any one of claims 8 to 13, wherein after receiving, by the second communication apparatus, the random access preamble from the terminal device, the method further comprises:
determining, by the second communication apparatus based on the group of random access resources, whether the terminal device supports the GNSS capability, or determining the random access preamble type of the random access preamble.

15. The method according to any one of claims 8 to 14, wherein after receiving, by the second communication apparatus, the random access preamble from the terminal device, the method further comprises:
sending, by the second communication apparatus, a frequency offset correction parameter to the terminal device.

16. A communication apparatus, comprising a module or a unit that is configured to perform the method according to any one of claims 1 to 7.

17. A communication apparatus, comprising a module or a unit that is configured to perform the method according to any one of claims 8 to 15.

18. A communication apparatus, comprising a memory, a processor, and a transceiver, wherein
the memory is configured to store computer instructions;
the transceiver is configured to receive and send a signal; and
the processor is coupled to the memory, and is configured to invoke the computer instructions in the memory, to perform the method according to any one of claims 1 to 7 through the transceiver.

19. A communication apparatus, comprising a memory, a processor, and a transceiver, wherein
the memory is configured to store computer instructions;
the transceiver is configured to receive and send a signal; and
the processor is coupled to the memory, and is configured to invoke the computer instructions in the memory, to perform the method according to any one of claims 8 to 15 through the transceiver.

20. A computer-readable storage medium, wherein the computer-readable storage medium stores computer-executable instructions; and when the computer-executable instructions are invoked by the computer, the method according to any one of claims 1 to 7 is performed, or the method according to any one of claims 8 to 15 is performed.

21. A computer program product, comprising instructions, wherein when the instructions are run on a computer, the method according to any one of claims 1 to 7 or the method according to any one of claims 8 to 15 is performed.

22. A chip, wherein the chip is coupled to a memory, and is configured to read and execute program instructions stored in the memory, to implement the method according to any one of claims 1 to 7, or implement the method according to any one of claims 8 to 15.
